# EUROPEAN PATENT APPLICATION

(11) **EP 2 605 476 A1**
(43) Date of publication of application: **19.06.2013**
(21) Application number: 13158589.5
(22) Date of filing: 06.11.2009
(51) Int. Cl.: H04L 29/06

(54) **Mobile communication device**

(30) Priority: 07.11.2008 GB 0820427
(62) Divisional of application: 09756544.4
(71) Applicant: INQ Enterprises Limited, Nassau, New Providence (BS)
(72) Inventor: Johnstone, Ken, London, SW11 4AN (GB); Edmonds, Gavin, London, SW11 4AN (GB); Davies, Simon, London, SW11 4AN (GB); Vitolo, Gaetano, I-00145 Rome (IT); Zincola, Andrea, I-00145 Rome (IT)
(74) Representative: Patel, Nikesh

(57) **Abstract**

The present invention in one embodiment provides a mobile communication device comprising: means for sending and receiving signals via a circuit-switched and/or packet switched telecommunications network; means for initiating communications over an Internet Protocol network via a separate communication service; a module for connecting to a communication service over an Internet Protocol network, the module comprising: means for determining identification data of the network service provider of circuit switched and/or packet switched network that the device is located in; means for comparing the identification data with predetermined identification data for a plurality of network service providers, wherein the plurality of network service providers are each assigned to one or a plurality of categories; and means for judging whether the device is located in one of the plurality of categories, wherein the plurality of categories are a first, second or third category; and wherein if the judging means judges that the device is located in a network in the first category, access to the communication service is allowed, if the judging means judges that device is located in a network in the second category, permission from a user of the device is sought before access to the communication service is allowed, and if the judging means judges that device is located in a network in the third category, access to the communication service is denied. A corresponding method is provided in another embodiment.

## Description

The present invention relates to mobile communication technology and particularly to an improved architecture for a mobile communication device. In addition, the present invention provides a device and method implementing the architecture.

Mobile technology is currently expanding to enable mobile communication devices to provide other forms of communication other than merely voice and text communication. A number of services can be accessed over the Internet via a mobile communication device so that it can be utilised in a similar manner as a computer terminal which has access to the Internet. Examples of services are Social Network applications such as Facebook, MySpace, Twitter, and Bebo. These services could be considered Internet based social networks. Many Internet services are so called Web 2.0 websites and have API interfaces which are typically RESTful which is a term known to a skilled person. In addition, other examples of services are online auctioning applications such as eBay. There are a number of issues that need to be addressed to allow for such services to be accessible on a mobile communication device and for any service that is accessed to operate in the most user-friendly manner on the mobile communication device. Mobile communication devices have a limited display area compared to computer displays for example and limited means for interacting with the user interface.

Users are able to access the Internet through their mobile communication devices using the Internet services provided by their mobile network service provider. In order for users to access particular services, network service providers may need to set up dedicated application servers. Furthermore, many services are reliant on the network service providers supporting and maintaining the infrastructure through which the services are available. Even if services are provided to a user's mobile device, the new service needs to be compatible with the mobile device to ensure that the user interface is not compromised and the service provides the associated functionality. New services may require installation of systems, technology or servers by network providers. Services are typically provided by mobile client applications that can be added to mobile devices, such applications having to be compatible with the mobile devices.

From a first aspect, the present invention provides an architecture for a mobile communications device that is capable of receiving a new application relating to a service and dynamically integrating the application and the functionality thereof into one or more applications that are already present on the mobile communication device. Mobile devices such as phones have significant limitations in user-interface design due to small display screen real-estate and limited means for user input - therefore it is especially important to provide integrated user-interfaces i.e. where installed applications present themselves in the application interfaces of one or more of those applications that are already present on the mobile communication device.

The present invention provides an application manager component that coordinates the integration of the new application into the one or more applications that are already present on the mobile communication device.

From another aspect, the present invention provides a method of integrating the functionality of a new application relating to a service, which has been installed on a mobile communications device, with one or more current applications that are already present on the mobile communications device, the method including:
receiving an installation package for a new application and installing the new application on the mobile communication device, the installation package including data relating to the integration capabilities of the new application;
initiating integration of the functionality of the new application with one or more current applications that are already present on the mobile communication device and that are identified by the data from the installation package.

The integration of the functionality preferably involves rebuilding the user interface of the current application(s)..

This allows a number of new applications to become integrated into the user interface of the current applications running on the mobile communication device and this integration is achieved dynamically at the mobile communication device. Moreover, with all the integration occurring in the phone, there is little or no dependency on network operators to install systems, technology or servers (above and beyond simply providing data connectivity from a mobile communication device to the Internet) or having partnerships in place with specific aggregators. This results in the mobile communication device of the present invention being capable of use on a number of networks without the network infrastructure needing to be expanded or changed to support the integration that is proposed herein. Thus, also makes the device more commercially attractive for sale to multiple network operators.

From another aspect, the present invention provides a mobile communication device comprising:
means for sending and receiving signals via a circuit-switched and/or packet switched telecommunications network;
means for initiating communications over an Internet Protocol network via a separate communication service;
a data storage unit for storing image data relating to a contact in a contact list of the telecommunications network and the communication service,
means for updating the image data relating to the contact in the data storage unit based on the image data provided by the communication service.

This allows image data relating to a contact to be updated without user intervention to show the most recent image that is currently part of a contact's image on a communication service.

From another aspect, the present invention provides a mobile communication device comprising:
means for sending and receiving signals via a circuit-switched and/or packet switched telecommunications network;
means for initiating communications over an Internet Protocol network via a separate communication service;
a module for connecting to a communication service over an Internet Protocol network, the module comprising: means for determining identification data of the network service provider of circuit switched and/or packet switched network that the device is located in; means for comparing the identification data with predetermined identification data for a plurality of network service providers, wherein the plurality of network service providers are each assigned to one of a plurality of categories; and means for judging whether the device is located in one of the plurality of categories.

In a particular embodiment, the categories are a white list, grey list and black list of network service providers. A user whilst roaming can be automatically allowed access to service depending on the network on which they are roaming.

In order that the invention is understood, embodiments will be described by way of example only with reference to the accompanying drawings in which:
Figure 1 shows a schematic diagram of an architecture of the mobile communication device according to a first embodiment of the present invention;
Figure 2 shows a perspective view of a first type of mobile communication device including the architecture shown in Fig. 1;
Figure 3 shows a flow diagram of the steps performed to integrate an HLet application into a native application in accordance with the architecture of Fig. 1;
Figure 4a shows a perspective view of a second type of mobile communication device including the architecture shown in Fig. 1, Figure 4b shows a perspective view of the device in Figure 4a from one side, and Figure 4c shows a perspective view of the device in Figure 4a from another side;
Figure 5 shows a perspective view of a third type of mobile communication device including the architecture shown in Fig. 1;
Figures 6a to 6d shows example screen shots representing a user interface of the device in Fig. 2, 4 or 5, when the Contact Book is accessed by a user of the device;
Figures 7a to 7j shows example screen shots representing a user interface of the device in Fig. 2, 4 or 5, when a merge of contacts from various communication services is carried out;
Figures 8a show an example screen shots representing a user interface of the device in Fig. 2, 4 or 5, when a Weather Widget application is accessed on the device, Fig, 8b shows the decisions that are made by the device, and Fig. 8c shows an example screen shot if the user is camped in a grey list network.
Figure 9 shows an interaction diagram between various components of the H_API.

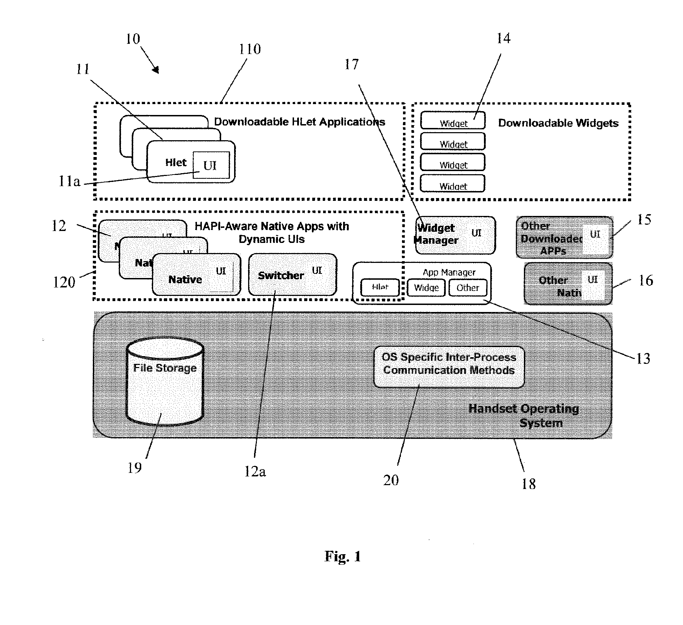

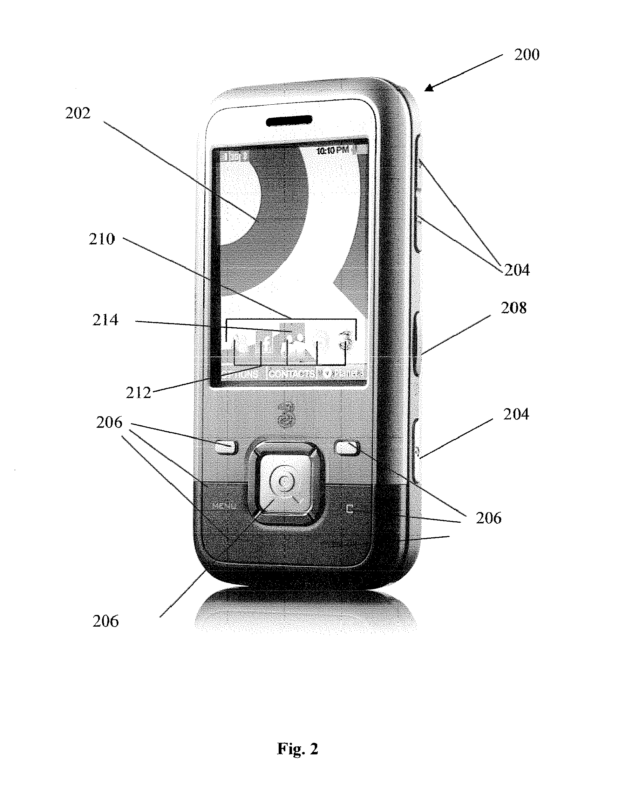

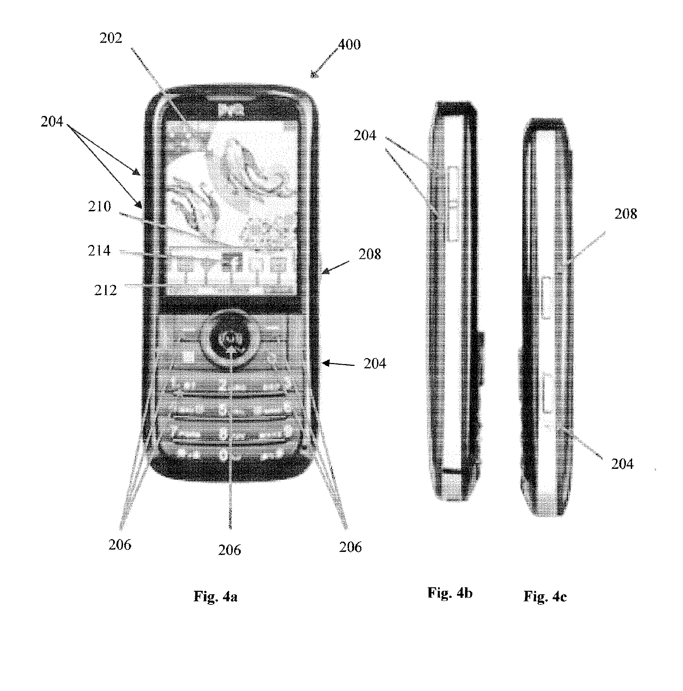

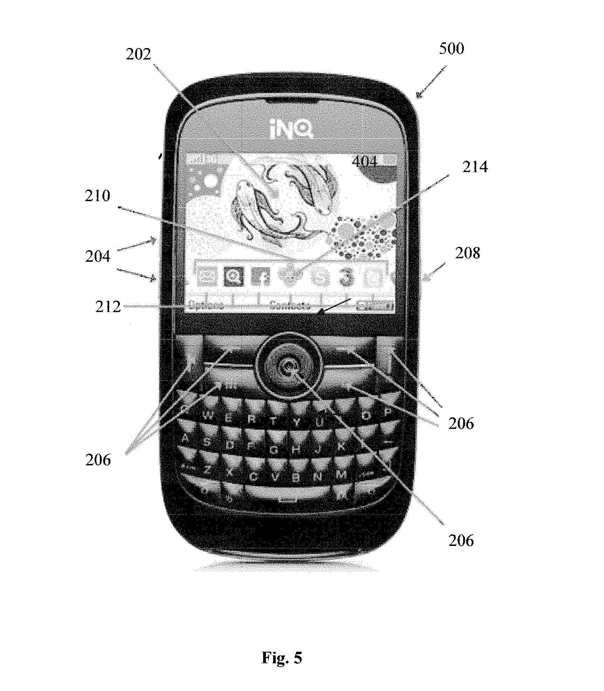

Referring to Fig. 1, a first embodiment of the present invention is an architecture 10 for a mobile telecommunications device. Fig. 2 shows one embodiment where the device is a mobile telephone handset 200. It will be appreciated that other mobile devices which are capable of connecting to a mobile telephone network and receiving internet protocol (IP) multimedia such as a personal digital assistant with appropriate telephony hardware can be used in the present invention. Other types of mobile telephones that can be used are shown in Fig. 4 where mobile handset 400 is shown and Fig. 5 where mobile handset 500 is shown. The same reference numerals are used to indicate features with similar functionality. Mobile handset 500 is different to the handsets in Figs. 2 and 4 in that it has a larger display than mobile handsets 200, 400 and is provided with a "QWERTY" keypad.

Referring to Figs. 2, 4, and 5, mobile telephone handset 200, 400, 500 includes a display 202 and a number of buttons 204 on the side of the phone body to enable the user to control certain aspects of the phone such as speaker volume or other aspects. Further buttons 206 are provided on the front surface of the handset 200 which also allow other aspects of the phone to be controlled by the user. One particular button known as the Switcher button 208 provides improved functionality and will be described later. The Switcher button is the third button down on right of the phone in this embodiment but is not restricted to this location.

The architecture 10 differs to conventional mobile telephone architecture in that it allows one or more applications to be installed on the telephone and for those applications to participate in presenting one integrated user interface. These applications will be referred to hereinafter as "HLets 11". The HLets 11 can be installed to the telephone prior to shipping or installed subsequently (for instance by the user downloading them) and are typically associated with a specific Internet-Style Communication community. The HLets 11 are shown in area 110 in the architecture 10 of Fig.1. The HLet may have an associated user interface 11a. An HLet without its user interface would essentially act as an adaptor between the Internet service functions and the equivalent functions in native applications. An HLet with its user interface allows for a richer set of user interactions with the Internet service specific to that service in addition to exposing Internet functions to the native applications.

These HLets 11 can include a number of online communities. These are, for example, Voice over Internet Protocol (VoIP) and Instant Messaging communities such as Skype, Windows Live Messenger, Yahoo!, etc and also include online social network communities such as Facebook, MySpace, Twitter, Bebo, etc. In addition, the HLets can include online auctioning applications such as eBay. The exact selection of HLets 11 may be country-specific given each social network's popularity within that country or may also be determined by the operator selling the mobile telephone handset depending on their business and/or the partnerships they have in place.

The architecture 10 also has a number of native applications 12 which are largely responsible for presenting common user interfaces. These native applications 12 are commonly used as a term in mobile phone handsets to refer to the pre-installed user-interface applications that are common to most handsets and fundamental to using a handset for circuit- and packet-network communications - such as call dialling, phonebook, messaging, browsing, etc. Native applications 12 are typically pre-installed before the handset is sold and often written as a suite of interacting applications (for instance one can launch a call from the keypad, from phonebook, from messaging and call history). However, it is possible for the native applications 12 to be updated by known methods such as OMA Device Management.

The native applications 12 are shown in area 120 in the architecture 10 of Fig. 1. Each native application 12 has the ability to make specific application programming interface (API) calls to the HLets 11 once they are installed. The installation and integration procedure of the HLets 11 into the mobile phone is described later. A defined set of methods are used to enable the native application 12 to query and interact with HLets 11. Accordingly, the native application 12 should be aware of the defined set of methods for the interaction to occur correctly.

The native applications 12 are adapted to be compatible with the HLets 11 by being written to be aware of the API functionality in the HLets 11 and such that a dynamic user interface (UI) can be built to include features from each HLet 11. Examples of native applications 12 in the mobile handset of the preferred embodiment that have been made API aware or include dynamic UI elements include,
- Contact Book (used interchangeably in this application as "Phone Book" and "Contact Book" to refer to the same native application)
- Messaging
- Media gallery
- Camera, both picture and video
- Call/Event log
- Dialer (the application that is responsible to initiate and receive calls)
- Internet Browser
- Status bar
- Popup manager

In addition, as shown in Fig. 1, one particular type of native application 12 is "Switcher 12a". The Switcher 12a has functionality which allows users to switch between different communication applications quickly and intuitively by providing a dedicated key 208 (shown in Fig. 2) on the mobile handset to activate the Switcher 12a. Furthermore the Switcher 12a provides further functionality in that it provides:
- Status within each communication application (for instance, whether they are currently logged in or out to a social community, whether the application is open or closed, etc). The status is reflected in the icon displayed;
- Interaction options defined by each underlying native application 12 or Hlet 11 (for instance, an option to sign out from the Switcher menu when status shows user is signed in, and vice versa);
- The automatic addition of new applications to the Switcher menu after those applications are downloaded;
- Enhanced operator control of the position of each community in the Switcher menu (where it appears, whether the user may remove it); and
- Dual-mode interaction - user key presses (short-press and long-press)

A central application manager component 13 is provided in the architecture 10 and has the function of managing the processes that are carried out between the HLets 11 and native application 12. It may also be adapted to manage non-HLet applications such as Widgets 14 that may be downloaded or other applications 15 which are not involved in present invention and therefore are not described in further detail. Furthermore other native applications 12 are present in the architecture which may not be compatible with the HLets 11. A Widget manager 17 is provided to manage the downloaded Widgets 14 and the application manager component 13 interacts with the Widget manager 17 such that it is informed when a Widget 14 is installed. Widgets are identified differently to HLets 11 so the application manager component 13 will know to pass on the information relating to the Widget 14 to the Widget manager 17.

The architecture 10 further has a handset operating system 18 which is conventional. For example, the operating system could be Symbian, Qualcomm BREW, Android or Java. In a first embodiment, the operating system used by the handset is Qualcomm BREW. File storage means 19 are provided in the handset. The operating system 18 has operating system specific inter-process communication methods 20 already installed. Hardware components particular to mobile telephone handsets such as radio frequency modules, signal conditioning circuits, power management units have not been described but are known to the skilled person.

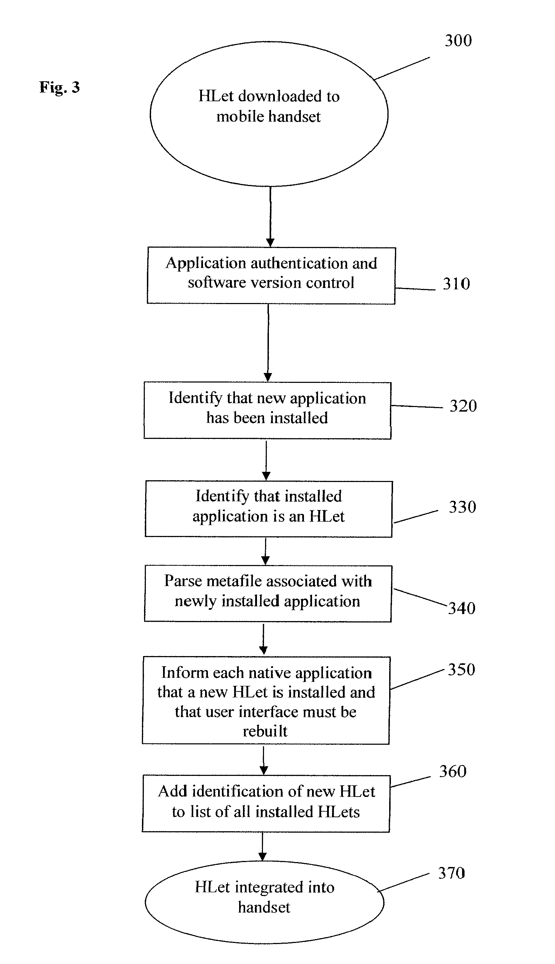

Turning to the installation process of the HLets 11 into the mobile handset and the integration of the HLets 11 into the native applications 12, reference is made to the flow diagram of Fig. 3.

In step 300, a new HLet 11 is downloaded by a user to the mobile handset. Although in this embodiment, the HLet is downloaded by a user, it is possible for installation to occur before the handset is provided to a user (i.e. prior to shipping). In any case, the various steps are still performed dynamically in the handset with no user action required. The download will typically include a number of files which are then installed (in a common folder). The installation process may vary depending on the operating system 18 utilised by the handset. The various operating systems all have well-known defined methods for installing application packages. The installation process can include application authentication (e.g. check that application contains correct certificate, credentials, etc to access handset functions) and software version control (overwriting a previous version of the same application) in step 310 before the actual installation of the HLets 11 into the handset begins.

Each HLet installation package will contain at least 2 files - a) the application executable and b) a metadata file which is preferably an XML file declaring its capabilities and required integration with the native applications. Additional files may also be included in the installation package such as one or more images to use as icons.

The application manager 13 will then perform various functions including
- Become informed that a new application has been installed (step 320)
   ○ In the first embodiment where the operating system 18 is Qualcomm BREW), application manager 13 is registered to listen to a standard BREW OS notification that occurs when new 'dynamic applications' are installed. Qualcomm's definition of dynamic application covers HLet applications 11 and other downloaded applications 15 but not Widgets 14 (which form UI elements in another part of Qualcomm platform called UIOne).
- Identify that the installed application is an HLet (step 330).

In Qualcomm this is done by examining the Applet Type declared in the Module Information File ('MIF') during package installation. The 'MIF' file is known to those familiar with the Qualcomm platform. HLet is reserved a parameter value (for any operator selling these handsets) that is used to indicate HLet classification.
- In the case it is an HLet, application manager 13 parses the metafile associated with the newly installed application (step 340).
   ○ in the first embodiment in BREW, it looks for a single file called "config.xml" in root directory of that installed application.
   ○ The metadata file declares which of the native applications 12 need to include user interface links for HLet functions, what type of interaction those links refer to as well as the text labels to insert. The text label can be language-specific thus allowing different text options for the label to be shown to different users depending on the language setting of the handset. For example, the XML file may specify that the phonebook and camera native applications will be impacted when the HLet 11 is downloaded, that a new command "Start Chat" is to be inserted in the phonebook, and which APIs are to be invoked as a result of a specific action (eg. call the "startChat" API whenever the user presses the left softkey on a "Start Chat" command)
- The application manager 13 then informs each native application 12 (which is referenced in the metadata - explicitly or implicitly) that a new HLet 11 is installed and that it must rebuild its user interface (step 350).
- The application manager 13 also maintains a list of all installed HLets 11 (step 360).

This is preferably in the form of a look-up table which is stored in file storage 19 in the handset memory. This is useful in the two following instances:
○ When the handset is powered up, the application manager 13 scans the handset memory looking for all installed HLets 11. It is possible that the HLet 11 was installed whilst the handset was powered down (e.g. when a handset is reflashed). On detection of new HLets, the application manager 13 can re-instigate native applications 12 to rebuild their menu options.
○ The application manager 13 can act as a central function for native applications 12 wishing to communicate with HLets 11. This will depend on the operating system specifics but on some occasions it may be necessary for a native application 12 to resolve status of an HLet 11 or the process identification of that HLet 11 running in the operating system 18 - for instance if direct communication is not possible.

Following these steps the HLet 11 will be integrated into the appropriate native applications 12 without user intervention (step 370). Accordingly, the user interface of the native applications is dynamically built when a new HLet 11 is installed. The integration of the HLet 11 into the appropriate native application user interfaces improves the functionality of the mobile handset but also provides an improved interface for a user of a mobile handset. For example, where the HLet 11 is a Facebook application, many of the features particular to the Facebook application such as user mood, avatar picture etc can be integrated into the relevant Contact entry in the Contact Book. The Facebook HLet could interact with Facebook using Facebook's RESTful API. Where the Hlet 11 is an eBay application, it allows user to place bids and be alerted when auctions are closing, or when the user has been outbid.

The native applications 12 support the following methods used to build one integrated user-interface
- Ability to make specific application programming interface (API) calls to HLet 11. As mentioned previously, there is a defined set of methods by which native application 12 can query and interact with HLet applications 11. One example of the API is the H-API (Hutchison API). Native applications 12 may signal HLets 11 directly or in some cases via application manager 13 (depending on the inter-process signalling methods available in the underlying operating system 18).
- Are responsive to calls (from application manager 13) to rebuild menu options in the native application 12.
- In some cases, shared access between applications to stored files e.g. to update status when applications are not launched. (e.g. H-API Method "IHLET_GET_AVATAR" (detailed later) stores the avatar image in the folder specified by config.xml).

For H-API calls to be made from native applications to HLets, it is necessary for both applications to be running. In general, operating systems such as BREW support this by allowing a native application to launch another application (such as an HLet) by instructing the operating system to invoke an instance e.g. via a system call. It is also known that parameters may be passed to an invoked application - for instance stating whether the launched application should appear in the foreground for the user to interact with or be launched in the background. In either case once the HLet is running it will be receptive to H-API calls.

In instances where the HLet needs to share data with native applications, it is not necessarily possible or desirable for the HLet application to invoke a native application. In some operating system environments, downloaded applications such as Java Applets may not have sufficient security privileges to invoke system calls. Also mobile handsets are typically limited in their performance depending on the processor and memory resources available and the need to preserve battery life - therefore consideration needs to be given to whether the cost of launching and having another application running is disproportionate to the action required.

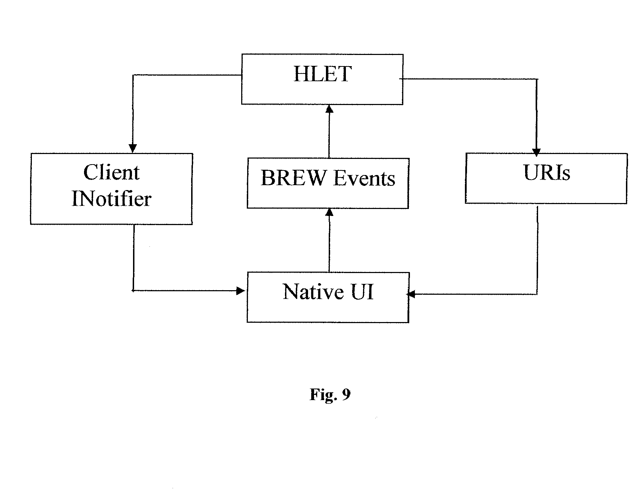

Figure 9 shows a general structure and interaction between various components where events ("Brew Events") may be sent by the native application 12 ("native UI") to the HLet application 11 ("HLet"); notifications ("Client INotifier") used by HLets to send events to a native application; and also notifications ("URI") used by the HLet to invoke native applications.

One specific instance in the first embodiment where this occurs is when a buddy in one of Internet Communities changes their photo (avatar). Next time the handset user launches the native Contact Book application, the Contact Book needs to show the latest avatar photos but it does not need to be updated until then. Therefore HLets can write the new avatar photo to a shared folder that is accessed by the Contact Book application the next time it is launched instead of invoking the Contact Book to instantiate for every update. However when the Contact Book application is already running, H-API calls would be used preferentially for an immediate synchronisation.

It is generally not easy to upgrade native applications 12 but this is also in theory possible for instance with Firmware Over-the-Air (FOTA) using Open Mobile Alliance Device Management. In this manner if a native application 12 needed to make use of features not included in the version of H-API it would be possible to upgrade. However given the close interaction between many native applications it is most likely that an entire suite of inter-related native handset applications would need to be upgraded and so this would not be undertaken lightly. Therefore, a particular advantage of a dynamic UI building process is that native applications 12 do not need to be upgraded every time a new HLet application 11 is added to the handset.

Widgets 14 do not support the H_API interface due to the limitations of UIOne. However it is still possible to send specific inter-process communications 19 from HLets 11 and native applications 12 to Widgets 14. In BREW these methods include the notification of the NotifyEvent method and PostURI method. It is also still possible to save data to a shared folder that the Widget 14 can access.

Both Widgets 14 and HLets 11 can remain in a connected state with internet services. Therefore, data transfer can occur without user intervention. Depending on the data charges levied by the operator and costs associated with data usage when roaming, it is desirable to add code to the Widget 14 or HLet 11 either to suspend data transfer or to inform the user of a likely associated charge. For example, a Weather Widget contains logic to determine the roaming status of the handset and identify whether the camped network the user is "camped in" is in a white, grey or blacklist. When the camped network is whitelisted, the Widget does not inform the user of data usage, greylist means that permission is sought from the user and in the Blacklist the user is denied access.

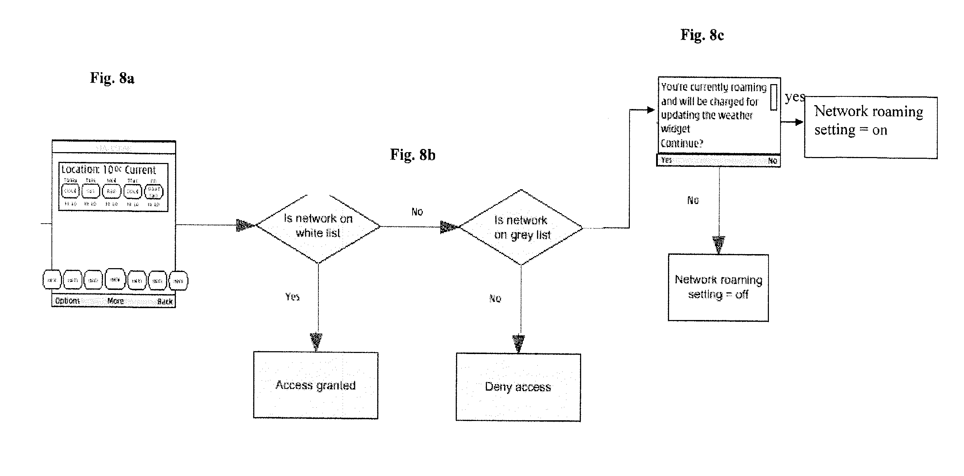

Referring to Fig. 8, when a user forces a refresh or adds a location to the Weather Widget, the Weather Widget application will ask a traffic managing component to return if the network within which the device is roaming is on the whitelist, greylist or blacklist.

As mentioned hereinbefore, the HLet applications 11 can be added to the handset through downloading. The HLet applications 11 are written to include the libraries and definitions of the H-API functions. The functions defined in H-API are largely abstracted from the specifics on each Social Network and Community but instead define the set of general concepts that are common to most communities including at least,
- Managing ones friends ('buddies') in each community with functions such as 'Add Buddy', 'Remove Buddy', 'Block Buddy', etc
- Details of the friend's community listing such as 'Show Profile', 'Get Avatar'
- Managing one's own listing e.g. Set Avatar, Set Mood/Status
- Community Management functions (Sign In, Sign Out)
- In addition a method is defined of making custom calls in HAPI to HLet when a generic function is not defined.

The native applications 12 can make H-API calls to each HLet application 11 for any of functions described in the H-API. Not all functions will be applicable to each HLet 11 and so the HLet programmer will need to add code to their application that decides how to handle the incoming API calls defined by the included H-API definition files.

A number of options exist for the discovery process between native application 12 and HLet 11 as to which API calls are relevant. The predominant methods are:
- Mandatory API calls. Some API functions are mandatory for HLet programmers to support. Therefore the native application will a priori know that calling these API function is supported.
- Implicit API calls. When a HLet metadata file declares that a new menu option must be added to a native application menu, it will include the method to invoke when the user select that option. Implicitly this API call and other associated API calls will need to be supported by the HLet.
- Explicit. (Future option). The metadata file could declare all supported APIs or supported subsets or profile level of support.
- Good Practice. If the HLet programmer thinks it possible that a native application may call an unsupported API function, it would be good practice to include code to respond to the native application with an appropriate error message.

The actual process by which calls are signalled from the native application 12 to the HLet application 11 is operating system specific but in general methods exist in all common operating systems. In the first embodiment, the handset is built on top of Qualcomm's BREW operating system where the synchronous events are signalled.

Further aspects regarding the functionality of the mobile communication device will now be described in more detail and illustrate how the use the H-API calls and dynamic user interface architecture manifests itself in the user interface.

The Switcher 12a has been described above but more detail is now provided with references to Fig. 1 and 2. The Switcher 12a is an application that enables the user to quickly launch applications and get to universal resource locaters (URL's) on the internet as well as fulfilling the primary method to multitask between running applications. Switcher 12a can be activated anywhere in the handset experience by pressing a dedicated key 208 or stroke of keys (Handset Industrial design permitting) and can be permanently shown on the handset idle display 202.

Icons 212 displayed in Switcher 12a carousel 210 can be a mixture of pre-installed applications, downloaded applications and URLs as well as other applications that are running. As well as a selection of the native application (such as Contact Book), Switcher 12a is designed to include HLet applications to provide an integrated user interface for interaction with Internet-based services. An example of the Switcher carousal 210 is shown in Fig.2 and this includes a number of icons 212 that are part of the carousal 210 and the Switcher 12a.

The Switcher application 12a is a native application whose user interface can be dynamically adapted according to this invention. Once Application Manager 13 detects that a new or updated HLet application is present in the handset, it will parse the associated metadata file to determine the behaviour of the new HLet within Switcher 12a and notify Switcher 12a of the existence of the new HLet.

In the first embodiment, the metadata associated with the HLet can specify certain attributes about the presentation of the new HLet in Switcher 12a user interfaces including
- its specific position in the carousel
- whether the user is able to alter this position
- whether the user can delete it from Switcher and
- the icon to display for the HLet application.

It should be noted that the metadata file may not state to automatically include the HLet application in Switcher's user interface and the user may add the application via the 'user chosen' route. If the user then subsequently decides to add the HLet application to the Switcher carousel, then Switcher application would need to parse the HLet metadata file in order to determine the integration in to its user interface.

HLet applications may still be removable by other means - for instance by the user by deleting the application via the native file manager program 16 that may also installed in the handset. In this case, Application Manager 13 will detect the removal or lack of an HLet application and therefore notify Switcher 12a to rebuild its user interface.

Running applications are also displayed in Switcher 12a. Switcher 12a gets the application icon from the application itself if that application specifies its own icons, or from a preset pool of icons that are included with the Switcher application. Typically the HLet application package downloaded will include icons and these icons to use are then referenced in the metadata file such that Switcher 12a can determine the relevant icon to display.

The HLet applications can control the graphical elements within that icon, and provide to Switcher updated versions if required. Switcher can support unlimited icon changes & will update icons immediately when their state changes. As the HLet application cannot directly control the native application (in other words the H-API calls are from the native application to the HLet and not vice-versa), the method used in the first embodiment is for HLet to make use of Qualcomm BREW's known system methods 19 to send a Notify event notification to the native application which in this invention then prompts the native application to query the HLet via an H-API method for the changes. BREW and Java (e.g. via JSR211) also support the PostURI notification method that can equally be used to signal from HLet application to native applications.

Some HLet application functions are directly accessible by the switcher carousel 210, enabling the user to perform tasks to that application without having to bring the application to the foreground. Each item in Switcher 12a has a contextual options menu, which reflects functionality of the current item in the centre of the carousel (the centre slot 214). Utilising the dynamic framework, HLet applications can register these functions in the options menu which can then be acted upon when the user selects them via H-API calls. For example, the user can log out of a chat application, or check email with an email application.

When an item in the Switcher carousel 210 is in selection (the centre slot 214), the options menu can support specific functions for that selected application. For example the Switcher options menu can recognise if an application supports signing in and signing out of online services. This enables the user to quickly sign-in and sign-out without needing to open the application itself. Most applications will reflect their logged in/ logged out status on a status bar. Applications can register multiple functions into the options menu via the dynamically built user-interface, and the user can access these functions without bringing that application to the foreground via H-API calls or waiting for that function to complete before being able to perform a task on another application.

Turning to another aspect of the mobile phone, Feeds which are used more commonly on the Internet can be integrated into the mobile phone. Feeds are content sources which conform to specific standards that are tailored to be fed through browsers or a Viewer. Essentially the feed application is a type of Viewer, with management features and integration into feeds found across the handset.

Feeds application in the mobile phone displays feeds in tabbed categories, with each tab following difference rules with the source and management of the feeds displayed by that tab. Typically the Feed Viewer would consist of a native application and could consist of an enhanced version of known RSS Viewer/Manager applications associated with the browser application. It is already known for a user in existing mobile phones to have an option in the browser to subscribe to an RSS or Atom feed. The structure of Atom feeds are defined by RFC4287 (http://www.ietf.org/rfc/rfc4287.txt). In the enhanced version it is also possible that RSS or Atom feeds may be detected in an HLet application as part of the associated Internet service - for example a buddy's online diary or photo album on a social networking website or blogging website.

'My Feeds' (label given as an example) is the initial tab which is shown when launching the feeds application. This displays feeds which are preloaded onto the handset and feeds that the user has added via the browser.

In the first embodiment, additional functionality has been added to Feed Viewer such the user may associate a particular Feed with a contact. The user may associate Feeds with contacts in the Contact Book native application or from the Feed Viewer. In either case, the association is being made between two native applications for which bespoke coding is included in these native applications (i.e. not an H-API call). Where a feed is identified from within an HLet application, it is typically the case that the HLet already knows which buddy the feed is associated with and so the linking with a contact book entry can be automatic. The Contact Book native application can make use of H-API calls to determine the feed status or equally the HLet application could write the feed data to the shared folder 19 for the Contact Book application or Feed Viewer to make use of.

In the first embodiment, the Contact Book native application has 'Contacts feeds' (label given as an example) view that is automatically generated and it is possible that all the feeds evident in the Contact Book are displayed in alphabetical order of contact details name.

Feeds contained in the 'My Feeds' view of the Feed Viewer native application can be assigned to a contact or a Widget. The Feed Manager would use OS inter-process communication method 19 to notify Widget 14 either directly or through the Widget Manager 17. This will transfer the display and management of that feed to either the widget application or the Contact Book application.

Feeds are displayed with the most recent added feed at the top, and the user interface shows the feed image or Favicon image for that domain, with the title of the feed and an indication of how many unread articles are ready to view.

The application has 2 following levels for each feeds which are the article listing within a feed, and finally the article details view. Both the article listings and article details can support images if supplied by the RSS feed. If no image is present then the default image for that feed is used, if present.

Articles within a feed are displayed as either unread or read. The user can opt to mark a single or all the articles as being read or unread.

Adding feeds is very straightforward with 2 methods available to the user. The easiest is through the approach integrated with the browser, where the user can select a feeds & add it to the Feeds application directly from the Browser application UI. Supporting the browser approach is also manual method where the user can type in the URL for the feed.

The action of adding a new feed prompts the feeds application to initiate a content update.

When feeds are downloaded to the device, the content remains until it is either overwritten by the next update or the user opts to delete the feed or feed content.

The feeds application has the ability to automatically update all the feeds following a set update schedule, for example every hour. When the update process starts new entries within a feed are updated. Some feeds will update all entries even if there is only 1 new entry present. Each feed can be set to auto update or only update when the user requests the action. The total number of entries per feed is limited to a set number, for example 20. This is an operator customised or flexed variable (i.e. determined pre-shipping in the handset software installation settings).

When creating a contact or editing a contact stored on the phone, the option is given to add a web feed to this contact. This passes information supplied from the desired RSS feed directly into the contacts list and the feeds section of the handset. When feeds are downloaded to the device, the content remains in these sections until it is either overwritten by the next update or the user opts to delete the feed or feed content.

A feed can also be assigned to a contact directly from the feeds section of the handset. This also allows the user to filter contacts and view all contacts with RSS feeds associated. Through this mechanism there is the ability to link into personal websites and be passed information directly about individuals with assigned feeds and allows the user to gain information beyond that supplied from centralised social networks.

Turning to another aspect of the mobile handset, a Contact Book native application 12 is provided. The phone book contains listing of contacts, with contacts being comprised of contact details. The phonebook is an application that has been developed to take a central role and makes substantial use of H-API calls to bring together information from the various HLet applications and feeds. The phone book is the central place for contact details, presence information & the user can initiate all forms of communication from one place.

Traditionally, the phone book application on handsets required users to type in their contact's details, or contacts could be obtained through loading from a SIM card, via Bluetooth or serial cable etc. The integrated phonebook builds from these traditional uses with the added ability to attain contacts from social networks.

The phone book native application has been designed to make use of the H_API which enables integration with a number of social networks. The limitation on the phone book is hardware dependent but will also depend on the number of HLets and contacts that the user wishes to maintain. In accordance with the architecture described above, the phonebook is made aware of HLet applications via Application Manager 13, can rebuild its user interfaces as already described and makes the required H-API calls to the new HLet application to add the details about contacts in the Internet service that each HLet application interfaces with.

For each new social network the user is given the option to integrate the contacts from that network into the phonebook. During integration a new contact record is created in the phonebook for each contact from the social network.

In contrast with previous methods (described above) of contact management, the phone book supports externally managed contact information & content. Initially when adding a new social network the user is able to import contacts from that community into the phone book application.

During or after import the user can associate (or merge) the contact with an existing contact record within the contact book. For example you can add Windows Live Messenger details to their existing phonebook contact that contains their phone number.

Through API's the social network retains control over the contact, contacts details & related content. When a user deletes, adds or amends contacts detail within the social community those changes are automatically reflected in the phone book.

Due to the nature of social networks, some contact details are incredibly dynamic, for example the avatar picture. As already described this is preferably done via H-API calls if both Contact Book and the HLet applications are already running but can also be done by saving the new avatar picture to a known location in file storage 19.

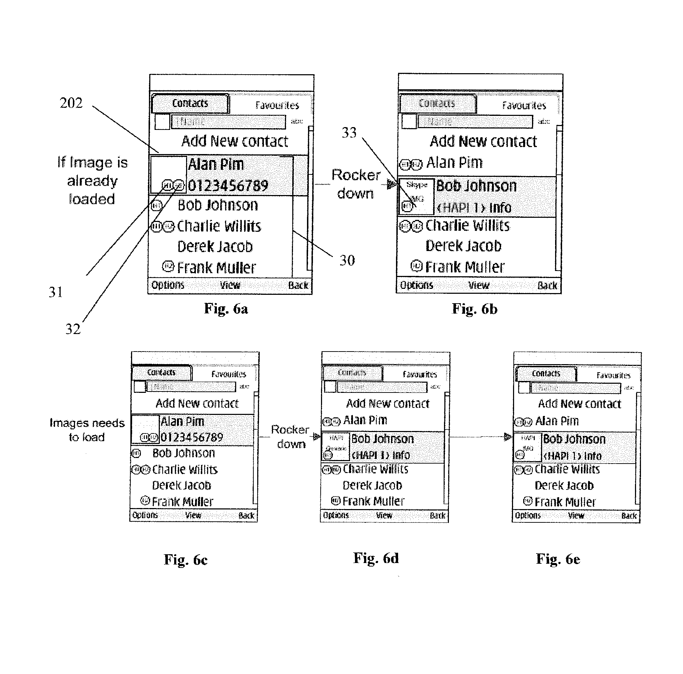

With reference to Figs. 6a to 6e, a display 202 of a mobile handset 200, 400, or 500 is shown. Fig. 6a shows the graphical user interface that may be displayed to a user of the handset when the Contact Book is accessed by a user. The Contact Book shows a list 30 of contacts which have already been added to the Contact Book. In Fig. 6a the list shows a number of contacts and an indication of whether data relating to certain HLet applications 11 is available for a particular contact. For example, the contact "Alan Pim" in Fig. 6a has data relating to a first type of communication service such as Facebook available for access by the user of the device and well as data relating to another type of communication service such as Windows Live Messenger. This is indicated by icons 31 and 32 which form part of the entry for the contact.

The contact has an image (such as an avatar picture) 33 associated with it as shown in Figs. 6b and 6e. In this example the image 33 is an avatar from the contact's Facebook account. It will be appreciated that the image could be from any communication service that is available through installation of the HLet application 11. The image from the Facebook account is saved in a shared folder in the file storage 19 which is also accessible by the Contact Book. When a user activates their Facebook account through the device, the image saved in the shared folder is updated with the current image of the contact (which the contact may have since changed through their Facebook account). The current image of the contact is displayed when the Contact Book is opened. In Fig. 6d, the contact "Bob Johnson" does not have an image, so a generic image is displayed instead. The conditions for a contact not having an image is in relation to no image being supplied by the HLet application 11, for example, when a user of the communication service such as Facebook does not have an avatar associated with their Facebook account. Other causes for no image being available is when the image fails to download to the handset device or the image is not in a recognisable format.

The native application 12 will not invoke "IHLET_GET_AVATAR" API unless the application is running. If the application is not running, the native application 12 will calculate the avatar's path via config.xml. For the contact, the corresponding Avatar if set will be saved by the Hlet 11 in the shared folder in the file storage specified within the config.xml with a filename obtained by hashing the contact user id with the user id_hash(HLetChar*pwzUserID) function.

The following structure could be used in order to implement the avatar fetching method in BREW.

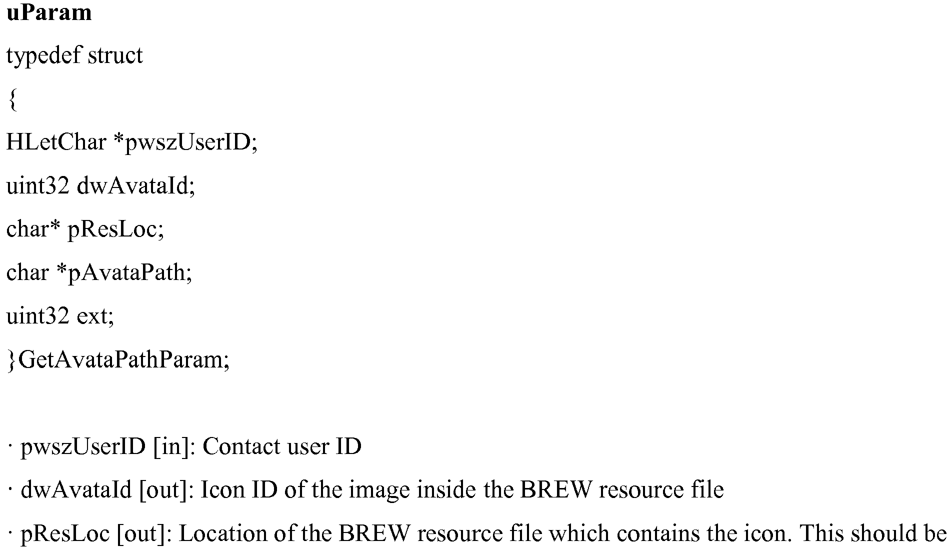

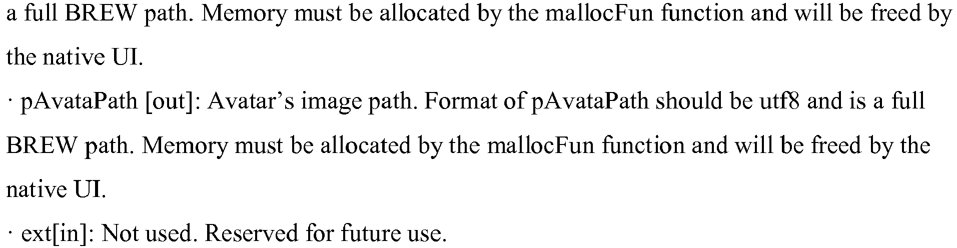

If a connection is required in order to set Avatar for a particular contact, the application may choose to connect before setting the custom string.

However, an application may also choose to connect at a later time. The application may also choose to start itself when the event is received.

The following structure could be used in order to implement the avatar setting method in BREW.

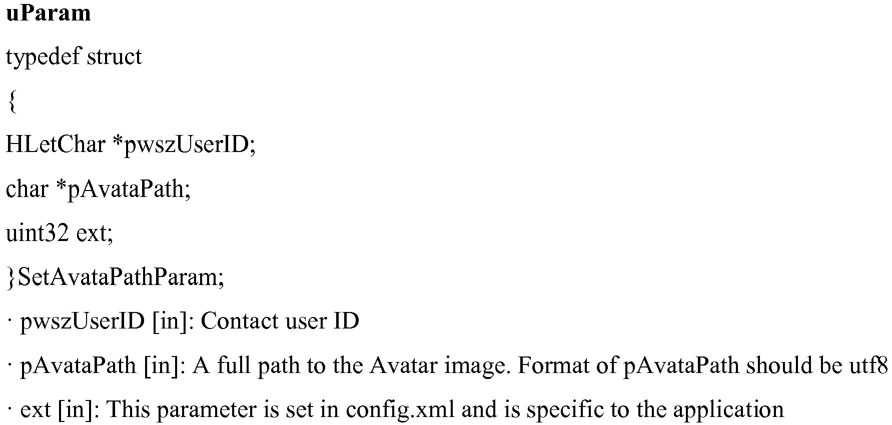

Traditionally a contact record is comprised of details which are commonly utilised by a mobile device, for example phone numbers and email addresses. The new phonebook contact record is able to extend to include additional details for social networks, for example username, mood and avatar picture. Additionally new content features are available for social networks which include links to contacts homepage or content feed. This information can be shown alongside the presence information when viewing contacts.

To support additional contacts details and content, the contact record has been extended following rules determined by the HLet application (and its metadata file) and via context sensitive rules. In addition to calling & messaging, to complement the new contact details, additional contact methods are made available to the user, for example chat, peer to peer message, poke and nudge. The new contact methods are contextual and are only made available to the user when selecting contact details from specific communities.

As each new social community is added & integrated into the phonebook, the user is likely to have multiple entries for the same person. The user can opt to keep multiple entries for a person or merge contact records together.

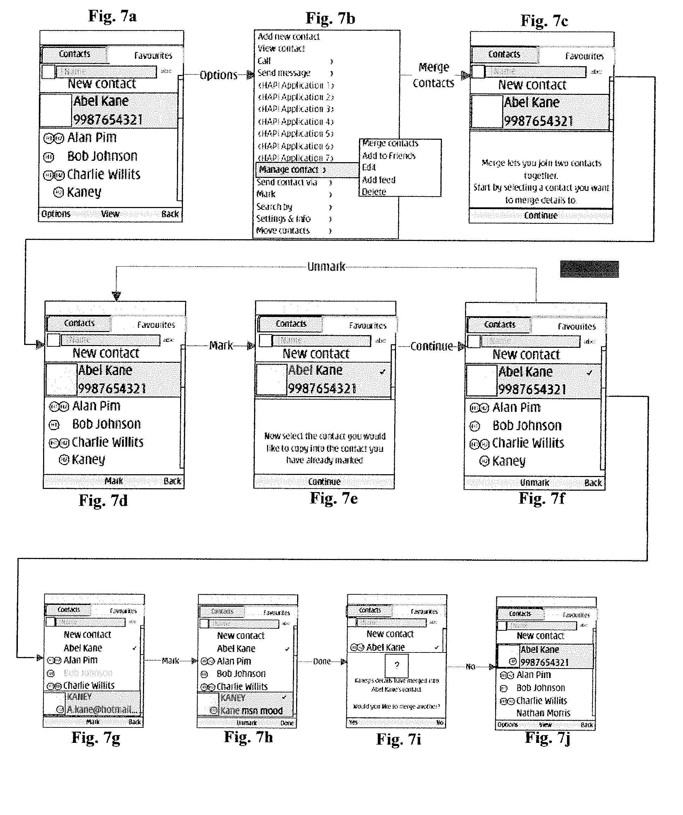

By using a 'Merge contacts' feature in the mobile phone, the user can select multiple contacts from different networks records to merge together. As the user selects contacts to merge together the process follows rules to help expedite the procedure. Figs. 7a to 7j show the user interface displayed to a user when contacts are to be merged. These include allowing the user to select a name for the contact record based either from the client or a user entered name. As well as aiding the merging procedure the rules also prevent the merging of the same types of contact records, for example avoiding merging 2 Windows Live Messenger (WLM) records together.

When looking across multiple social communities under the merge contacts feature it is assumed that a contact only appears once in each community. Therefore, once the user has identified a match from the multiple entries for the same person that may be present in the phonebook, all possible matches from that particular community are not listed or put to the bottom of the list of suggestions. The premise is that most people only maintain one identity per Internet Service (i.e. one Facebook account, one SkypeID, etc) and therefore the remaining unmatched records from the Internet service are unlikely to relate to a contact for which a match has already been made. This results in a shortening of the list of potential matches from the remaining communities for the user to select from and therefore improves the user interface experience especially on a handset with a limited size display.

The Contact Book can now display presence information, preferred contacts details & expedite replying & initiating communications for all contacts across all supported Internet services.

This presents the multiple channels in a single location giving the user a large amount of information in one space and enables the choice of the most appropriate means to start communication with a stored contact based on the contacts online activities. It should be noted that this has been designed to ensure it does not impede the ability to make a normal voice or video call,

The phonebook is able to display current presence status utilising API's between the phonebook application and social network application. This enables the social network application to control the state of presence, which can follow any rules that social network has. The onus is on the social network application to provide the presence status to the phonebook application. The Contact Book can then make use of the relevant H-API calls to retrieve the presence status from the associated HLet application.

As the phonebook supports multiple social networks it also supports the indication of multiple presence indicators.

As well as the normal alphabetical view of contacts records the phonebook has a new view which the user can quickly access call 'Friends', Contact records are added to the friends view by the user manually, with the user in full control of the order which the contacts records are displayed.

Friends view is further enhanced through a richer listing of contact records where the usual name and phone number is complimented with latest content feed information, presence for more social communities & larger avatar pictures.

The new phonebook contact record is able to extend to include additional details for social networks, for example username, mood and avatar picture. These imported pictures taken from the contacts can be used in a variety of areas throughout the handset. The pictures can be displayed where the contact information is stored, or it can be actively used when an incoming or outgoing call is made. In this manner the laborious task of adding a photo either stored on the handset, or taken by the handset when storing a contact can be circumvented.

In examples where a contact has multiple stored pictures there is a mechanism available to allow for the user to select which of these images are the preferred detail for the user to be presented with, both when viewing the contact images and when receiving or making calls. This is independent of the channel that the call is made or received through promoting the end users. The end result is that the user is presented with a rich gallery of images with minimal effort required that can be presented in different situations.

For instances where an Internet community or communities have a larger number of contacts than there is space available on the mobile device, a mechanism is needed to manage the merge, and maintain the view of Internet Contacts, with the mobile device phonebook (Community Friends Manager).

Community Friends View is a component available on the mobile handset and is a view of all the Internet Community Contacts that the user can select (or deselect) for merge with the mobile device phonebook. Whilst selecting the Internet Community Contacts through this view they are added (or removed) dynamically to the mobile device phonebook. A real time update of the status of the merge, including remaining free space, is presented graphically.

The Community Friends Manager also supports the recognition of deltas (addition, change, removal) to the Internet Community Contacts for the purpose of supporting further merging/notification to the mobile user. Conversely any change to the mobile device phonebook can be reflected back into the Community Friends View.

Additional synchronisation rules can be added to the Community Friends Manager that allow changes to the mobile device phonebook to be reflected back into the Internet Community (addition, removal, modification of an Internet Community Contact).

The Community Friends Manager can be used by more than one Internet Community Application to manage synchronisation with the mobile device phonebook (IM, Social Network, Email, Network Address book, Desktop Address Book, etc).

Another aspect of the mobile device provides the possibility for the user to share links of visited pages by means of downloadable applications.

Traditionally, when the user is browsing they can share the reference to the current page by using integrated messaging applications (e.g. send a link via SMS). In the present mobile device, users can send links to a generic service. This service must correspond to an HLet application 11 that has been downloaded on the handset and that is able to process the URL that is passed by the browser. The result of this process is service dependent and may correspond to a message being sent to another user or to a message being sent to a machine. Two examples are: share this link via WLM, or post this link to my Facebook Wall.

The implementation of this feature requires two steps:
a) the downloadable application that will process the link will indicate that it is able to process URL by using XML metadata (as was used in the integration method of Fig. 3). By using the same XML metadata it will also indicate which command must be added to the browser UI so that the user is able to select to link and share it.
b) Whenever this command is invocated by the user via the browser UI, the handset will call a specific H-API towards the application that is registered with that command.

Specific implementations of this invention are involved in examples such that it would be possible to submit photos or other types of media data from the Media Gallery or Camera native applications 12 to the HLet applications 11 such as Facebook. Further, Windows Live messages can be sent from Contact Book to the WLM HLet. Messages can also be sent to contacts in a Windows Live Messenger HLet application. Notifications of email can be present in the status bar when new mail is pushed to the mail HLet.

In addition to the claimed embodiments in the appended claims, the following is a list of additional embodiments which may serve as the basis for additional claims in this application or subsequent divisional applications:

### Embodiment 1.

A mobile communication device comprising:
means for sending and receiving signals via a circuit-switched and/or packet switched telecommunications network;
means for initiating communications over an Internet Protocol network via a plurality of separate communication services;
one or more applications comprising a user interface; and
an application manager component for coordinating integration of the functionality of a new application relating to a communication service into the user interface of the one or more applications already present on the communication device.

### Embodiment 2

The device of embodiment 1 further comprising means for installing the new application, and wherein the application manager component is adapted to identify the type of new application that has been installed.

### Embodiment 3

The device of embodiment 2 wherein the application manager component is adapted to inform each of the one or more applications already present on the communication device that a new application has been installed and causes the one or more application to rebuild their respective user interfaces in order to include the functionality of the new application in the user interfaces of the one or more applications.

### Embodiment 4

The device of embodiment 1 or 2 wherein the mobile communication device comprises storage means for storing data relating to the newly installed applications.

### Embodiment 5

The device of embodiment 4 wherein the storage means is adapted to store a list of newly installed applications.

### Embodiment 6

The device of embodiment 5 wherein the list is in the form of a look-up table.

### Embodiment 7

The device of embodiment 4 or 5 wherein the storage means comprises a predefined set of methods to permit the one or more applications already present on the communication device to query and interact with the new application.

### Embodiment 8

The device of any preceding embodiment wherein the communication services are selected from a group consisting of VoIP communication, Instant Messaging (IM) communication, social network communities, and auctioning over the Internet Protocol network.

### Embodiment 9

The device of any preceding embodiment wherein a first application already present on the communication device comprises a list of contacts for telephony services, and the device further comprises means for adding data relating to users of other communications services to the list of contacts.

### Embodiment 10

The device of embodiment 9 wherein the device further comprises means for merging data relating to users of the other communication services with contacts in the list of contacts.

### Embodiment 11

The device of embodiment 9 or 10 wherein the data relating to users of the other communication services includes image data associated with each user, and the new application is adapted to obtain the latest image data from the communication services and store the latest image data in the storage means, and wherein the first application is adapted to access the latest image data from the storage means when a user accesses the first application.

### Embodiment 12

The device of embodiment 11 wherein the device comprises means for displaying the latest image data when a user of the device receives a signal via a circuit-switched telecommunications network.

### Embodiment 13

The device of any preceding embodiment wherein further comprising a module for connecting to communication services over an Internet Protocol network, the module comprising means for determining identification data of the network service provider of circuit switched and/or packet switched network that the device is located in.

### Embodiment 14

The device of embodiment 13 wherein the module further comprises means for comparing the identification data with predetermined identification data for a plurality of network service providers, wherein the plurality of network service providers are each assigned to a first, second or third category, and means for judging whether the the device is located in the first, second or third category.

### Embodiment 15

The device of embodiment 14 wherein if the judging means judges that the device is located in a network in the first category, access to the communication service is allowed, if the judging means judges that device is located in a network in the second category, permission from a user of the device is saught before access to the communication service is allowed, and if the judging means judges that device is located in a network in the third category, access to the communication service is denied.

### Embodiment 16

The device of any preceding embodiment wherein the device comprises a common graphical user interface for providing an integrated user access mechanism for the new application and one of applications already present on the communication device comprises means for determining the current status of a the new application and for displaying the current status on the common GUI.

### Embodiment 17

A mobile communication device comprising:
means for sending and receiving signals via a circuit-switched and/or packet switched telecommunications network;
means for initiating communications over an Internet Protocol network via a separate communication service;
a data storage unit for storing image data relating to a contact in a contact list of the telecommunications network and the communication service,
means for updating the image data relating to the contact in the data storage unit based on the image data provided by the communication service.

### Embodiment 18

A method of integrating the functionality of a new application relating to a communication service, which has been installed on a mobile communications device with one or more current applications that are already present on the mobile communications device, the method including:
receiving an installation package for a new application;
installing the new application on the mobile communication device, the installation package including data relating to the integration capabilities of the new application; and
integrating the functionality of the new application with one or more current applications that are already present on the mobile communication device and that are identified by the data from the installation package.

### Embodiment 19

The method according to embodiment 18 wherein the integrating step includes identifying the type of new application that has been installed.

### Embodiment 20

The method according to embodiment 18 or 19 wherein the integrating step further includes determining which of the one or more current applications that are already present on the mobile communication device need to be integrated with the functionality of the new application, and informing those current application that need to be integrated with the functionality of the new application to rebuild their respective user interfaces.

### Embodiment 21

An application manager component for use with a mobile communications device comprising means for sending and receiving signals via a circuit-switched and/or packet switched telecommunications network and means for initiating communications over an Internet Protocol network via a plurality of separate communication services, the application manager being adapted to coordinate integration of the functionality of a new application relating to a communication service into the user interface of the one or more applications already present on the communication device.

## Claims

1. A mobile communication device comprising:
means for sending and receiving signals via a circuit-switched and/or packet switched telecommunications network;
means for initiating communications over an Internet Protocol network via a separate communication service;
a module for connecting to a communication service over an Internet Protocol network, the module comprising: means for determining identification data of the network service provider of circuit switched and/or packet switched network that the device is located in; means for comparing the identification data with predetermined identification data for a plurality of network service providers, wherein the plurality of network service providers are each assigned to one or a plurality of categories; and means for judging whether the device is located in one of the plurality of categories, wherein the plurality of categories are a first, second or third category; and wherein if the judging means judges that the device is located in a network in the first category, access to the communication service is allowed, if the judging means judges that device is located in a network in the second category, permission from a user of the device is sought before access to the communication service is allowed, and if the judging means judges that device is located in a network in the third category, access to the communication service is denied.

2. The device of any preceding claim wherein the communication service is selected from a group consisting of VoIP communication, Instant Messaging (IM) communication, social network communities, and auctioning over the Internet Protocol network.

3. A method of connecting a mobile communication device to a communication service over an Internet Protocol network, the mobile communication device comprising means for sending and receiving signals via a circuit-switched and/or packet switched telecommunications network and means for initiating communications over an Internet Protocol network via a separate communication service, the method comprising:
determining identification data of the network service provider of the circuit-switched and/or packet switched network that the device is located in;
comparing the identification data with predetermined identification data for a plurality of network service providers, wherein the plurality of network service providers are each assigned to one of a plurality of categories;
judging whether the device is located in one of the plurality of categories,
wherein the plurality of categories are a first, second or third category; and wherein if it is judged that the device is located in a network in the first category, access to the communication service is allowed, if it is judged that device is located in a network in the second category, permission from a user of the device is sought before access to the communication service is allowed, and it is judged that device is located in a network in the third category, access to the communication service is denied.
